# EUROPEAN PATENT SPECIFICATION

(11) **EP 4 123 368 B1**
(45) Date of publication and mention of the grant of the patent: **11.11.2026**
(21) Application number: 22186614.8
(22) Date of filing: 28.09.2016
(51) Int. Cl.: H04N 23/63, H04N 23/67, H04R 1/40, H04N 23/957

(54) **METHOD OF REFOCUSING IMAGES CAPTURED BY A PLENOPTIC CAMERA AND AUDIO BASED REFOCUSING IMAGE SYSTEM**
VERFAHREN ZUR NEUFOKUSSIERUNG VON AUFGENOMMENEN BILDERN EINER PLENOPTISCHEN KAMERA UND AUF AUDIO BASIERENDES NEUFOKUSSIERUNGSBILDSYSTEM
PROCÉDÉ DE REFOCALISATION DES IMAGES CAPTURÉES PAR UNE CAMÉRA À FONCTION PLÉNOPTIQUE ET SYSTÈME D'IMAGE DE REFOCALISATION BASÉ SUR L'AUDIO

(30) Priority: 29.09.2015 EP 15306528
(43) Date of publication of application: 25.01.2023
(62) Document number(s) of the earlier application(s) in accordance with Art. 76 EPC: 16775208.8 / 3 357 230
(73) Proprietor: InterDigital CE Patent Holdings, 75017 Paris (FR)
(72) Inventor: ALLIE, Valerie, 35230 SAINT-ARMEL (FR); HELLIER, Pierre, 35235 THORIGNE-FOUILLARD (FR); DUONG, Quang Khanh Ngoc, 35000 RENNES (FR); PEREZ, Patrick, 35200 RENNES (FR)
(74) Representative: Interdigital

(56) References cited:
- WO-A1-2014/090277
- CN-A- 104 780 341

## Description

### TECHNICAL FIELD

The present disclosure relates generally to digital recording and photography and more particularly to digital recording and photography via a plenoptic camera using audio based selection of focal plane and depth.

### BACKGROUND

Photography creates durable images by recording light or other electromagnetic radiation. Images are captured electronically by means of an image sensor or chemically by means of a light-sensitive material. Typically, a lens is used to focus the light reflected or emitted from objects into a real image on the light-sensitive surface, inside a camera during a timed exposure. With an electronic image sensor, an electrical charge is produced at each pixel, which is then processed and stored in a digital image file for further use. In classic photography, the focal surface is approximately a plane or focal plane. The focal surface is perpendicular to the optical axis of the camera and the depth of field is constant along the plane. The images that are captured are basic in configuration since they are limited in range due to these rules relating to focal surface of depth of field. By contrast, light field or plenoptic cameras offer more complex configurations.

A plenoptic camera uses a micro-lens array that is positioned in the image plane of a main lens and before an array of photosensors onto which one micro-image (also called subimage) is projected. Consequently, each micro-image depicts an area of the captured scene and each pixel associated with that micro-image shows this certain area from the point of view of a certain sub-aperture location on the main lens exit pupil. The raw image of the scene is then obtained as a result of the sum of all the micro-images acquired from respective portions of the photo-sensors array. This raw image contains the angular information of the light-field. Theoretically and computationally, the plenoptic cameras offer the possibility to project superior image captures using complex configurations which are not available when using classic cameras. Unfortunately, however, there are many practical shortcomings that have limited the prior art from taking advantage of the possibilities that can be realized using plenoptic cameras. These limitations have been even more challenging when attempting capturing of video contents.

CN 104 780 341 A discloses a plenoptic camera that re-focus images based on audio information. In a specific implementation involving a video conference, a face recognition is first performed to locate the participants and then the location of a speaker among the participants is located using a sound source localisation method based on time estimation delay.

WO 2014/090277 A1 discloses spatial audio processing, including microphone-array based processing, audio focusing/zooming, directional filtering, beamforming-like processing, and linking audio tracks with video data.

### SUMMARY

A method according to independent claim 1 and a system according to independent claim 2 are provided for refocusing images captured by a plenoptic camera.

Additional features and advantages are realized through the techniques of the present invention. Other embodiments and aspects of the invention are described in detail herein . For a better understanding of the invention with advantages and features, refer to the description and to the drawings.

### BRIEF DESCRIPTION OF THE DRAWINGS

The invention will be better understood and illustrated by means of the following embodiment and execution examples, in no way limitative, with reference to the appended figures on which:
Figure 1 depicts a flow diagram illustrating steps for conducting automatic refocusing function according to one embodiment;
Figure 2A and 2B depict a block diagram of a system used in conducting processing steps according to the embodiment of Figure 1;
Figure 3 depicts a block diagram illustrating the dominant audio direction and estimated width of an area of interest according to one embodiment;
Figure 4 depicts a graphical illustration of a video cone of interest according to one embodiment;
Figures 5 and 6 provide different embodiments of a system having a distributed microphone array configuration;
Figure 7 depicts a block diagram illustration of beamforming step of embodiment of Figure 1;
Figure 8 depicts beamforming function such as that conducted in accordance to a system such as used in conjunction with Figures 2 through 4;
Figure 9 depicts beamforming function such as that conducted in accordance to a system used in conjunction with Figures 5 and 6; and
Figure 10 depicts a block diagram of a system having a distributed microphone array according to another embodiment.

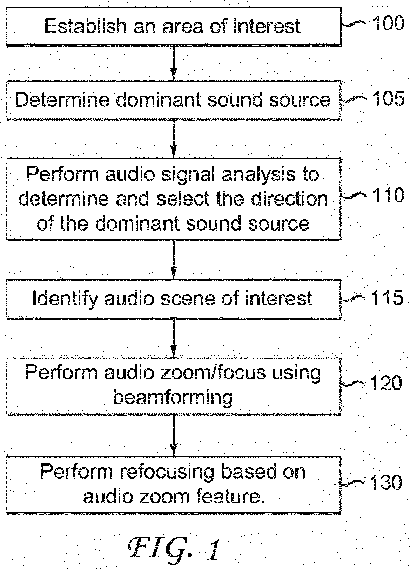

In Figures 1-10, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications.

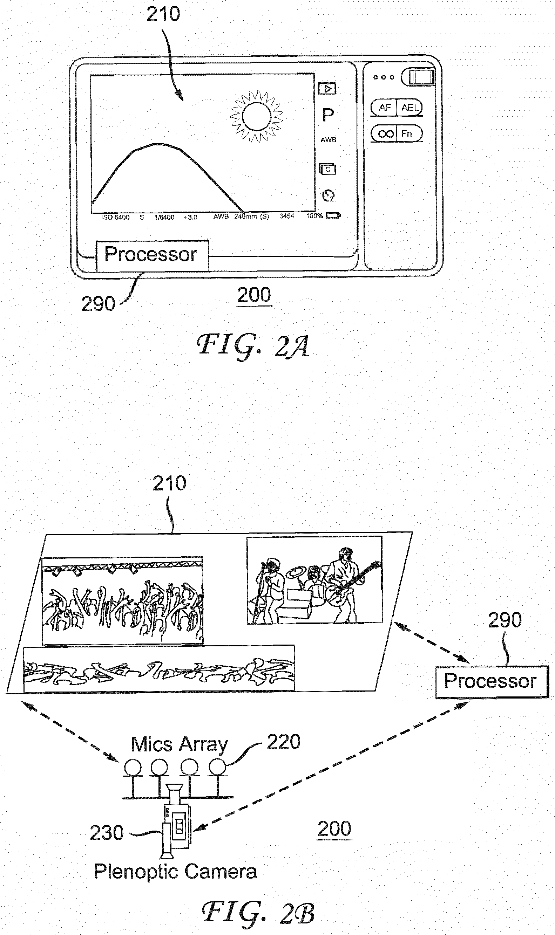

Figure 1 is a flow chart depiction of one embodiment illustrating a methodology providing automatic refocusing of images using one or more plenoptic camera(s). In one embodiment, an audio component can be used to calculate the appropriate focal plane and depth of field of an image. One such technique is discussed using the methodology of Figure 1. The steps of embodiment of Figure 1, will be discussed in conjunction with system configuration of embodiments provided in Figures 2 through 10, to aid understanding.

In classic photography, the focal surface is a plane perpendicular to the optical axis of the camera. In using plenoptic cameras, similar re-focus properties can be exploited when taking still pictures, as the user interaction remains at a basic level. This is not the case with video captures and live image streaming(s) using a plenoptic camera, as more sophisticated computations are needed. Since scenes and images captured by array of lenses in a plenoptic camera are captured from different angles, and there are different options for choosing the extent of sharpness of different images in a scene, focusing properties of different scenes and images can be challenging. It would be desirable to use an automatic refocusing techniques but it challenging to do so in where the focal planes remain perpendicular to the optical axis. This is because in many instances the focal planes cannot remain perpendicular to the optical axis, especially during an ever changing video or live stream broadcast. Other examples can also be easily imagined. For example, consider a case where an "all-in-focus" mode is utilized. In this case, the captured scene produces images that must all remain intentionally sharp, irrespective of distance. This can amount to infinite depths of fields and arbitrary focus planes that are not perpendicular to the optical axis. In a different example, an "interactive focus" field can be used that allows a user to point and select an object of interest. In this case, the plane of focus must be computationally placed at the right distance for each image. In this case, the focal point is perpendicular to the optical axis only for objects that must be kept in sharp focus. In a similar case, only objects in close proximity may be selected to produce sharp images. In such a case, the depth of fields are kept as a small number constant, and all scene elements at a distance are differently computed than the closer ones. Consequently, as objects get out of focus they appear intentionally blurred. Yet in another case, the camera is disposed such that the focus plane is slanted and therefore the focal planes are not perpendicular to the optical axis.

Referring back to the embodiment of Figure 1, the technique used herein can be applied, in one embodiment, such that an image (hereinafter defined as a video capture) can be projected optimally. The image/video can be provided as a broadcast stream, a still picture, a recorded video or selected by a user via a user selection input device as can be appreciated by those skilled in the art. In each case, a light field segmentation is performed accordingly, in each case, to identify the depth of this area or object depth. Focus plane is then defined, perpendicular to the optical axis, so that area or object of interest remains in sharp focus as intended. This technique can be extended to video captures (with or without object tracking) to ensure time consistency between frames. Before discussing the individual steps as shown in embodiment of Figure 1, it may be helpful to consider a system that can be used in employing such steps. Figures 2A and 2B, depict block diagrams of a system as per one embodiment of the present principles.

The system of Figures 2A and 2B can be utilized to apply the techniques provided by the embodiment of Figure 1. In Figures 2A and 2B, an automatic refocusing system 200 is shown using one or more plenoptic camera and associated technology. In one embodiment, a display 210 is shown. The display 210 can be of any size or shape as can be used in conjunction with a computer, a television set, a projection screen, a mobile device such as a smart phone and others as can be appreciated by those skilled in the art. In the examples provided in the figures, to aid understanding, a large display such as a projection screen or television display is used but this is only in the way of example.

Figure 2A can incorporate all the components of Figure 2B, in one embodiment. Alternatively, Figure 2B can be comprised of different freestanding components as will be discussed. To aid understanding, the embodiment of Figure 2B will be now discussed as the separate components are visibly identifiable and therefore easier for reference purposes.

Figure 2B depicts a system 200 with a display 210. In one embodiment, the system 200 comprises a light-field video capture device 230 based on plenoptic or camera array technology (herein also referenced simply as plenoptic camera 230). An audio capture device 220 is in processing communication with the camera 230 . The audio capture device 220 is comprised of one or several distributed microphone arrays. In one embodiment, the audio system 220 (i.e. the microphones) is approximately calibrated with respect to video capture device or plenoptic camera 230. In the example depicted in Figures 2A and 2B, one or a plurality of processors referenced by numeral 290 is/are provided. The processor 290 is in processing communication with the display 210, the plenoptic camera 230 and the audio capture device 220 as indicated by the dotted lines. In case there is more than one processor, the multiple processors are also in processing communication with one another. The processor(s) may be embedded in different areas within the display 210, the camera 230, the audio capture device 220 or be alternatively freestanding as shown in the example of Figures 2A and 2B. Therefore, in one embodiment where one or more processors are embedded in each the camera 230 and/or the audio capture device 220, the camera 230 and audio capture device 220 can be sending and receiving digital data to one another and be in processing communication with one another. In addition, the processor(s) can be in communication with other computers or computing environments and networks (not shown).

Now referring back to Figure 1, reference is made to the preliminary steps 100, 105 and 110 within the claimed method, in the step shown by reference 100, a dominant audio source is determined that is associated with a displaying image. In one embodiment, the dominant audio source can be determined on a continual basis when images quickly appear in form of image or video in rapid succession of one another during a live or recorded program and/or broadcast. In one embodiment, an audio processing technique can be used to allow the extraction of dominant audio directions, such as by audio source localization algorithms as can be appreciated by those skilled in the art. The direction of the dominant audio source is then selected as the direction of interest of the audio is determined as shown by reference numerals 110. In anothere embodiment, steps 105 and 110 may be combined in one step such that the audio source localization algorithm outputs the direction of dominant audio source which will be then considered as the target source to be refocused.

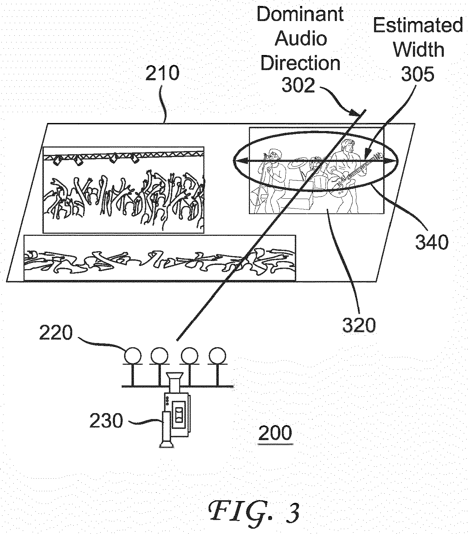

Applying steps 105 to 110 of Figure 1 to the examples discussed by embodiments of Figures 2A and 2B can result in a system as depicted in Figure 3.

Figure 3 illustrates an embodiment where the audio processing technique is used to extract audio directions associated with the dominant audio source (i.e. Figure 1 in steps 110). In the embodiment of Figure 3, a region of interest 340 is established that is associated with at least one dominant audio direction. The dominant audio direction is determined as shown by reference numerals 302 and the width of the region of interest 340 is also calculated as shown at 305. In one example, the width of the region of interest will be narrow for a dominant point source may be such that the dominant audio is coming from a single direction (single person speaking). In another example, the width will be set larger for a more spread out or a moving source. This may be the case where the dominant audio is coming from several co-located sources, such as from a music band with several musical instruments and leading voices on a stage as shown in the screen provided in the top left corner of Figure 3 as shown by reference numerals 320 .

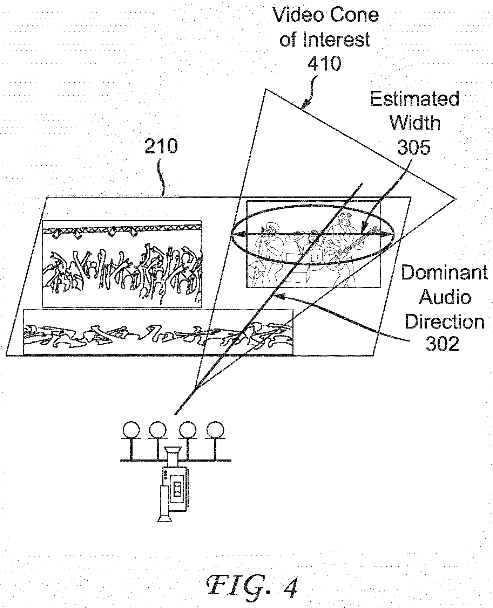

In one example, where an audio source localization algorithm is used to further establish audio directions, an audio signal analysis is also performed to provide an approximate estimate of the angular width of the area of interest. The audio source localization technique is then used as to define the angular extent of a region of interest, resulting in a "cone of interest" as shown in Figure 4 at 410.

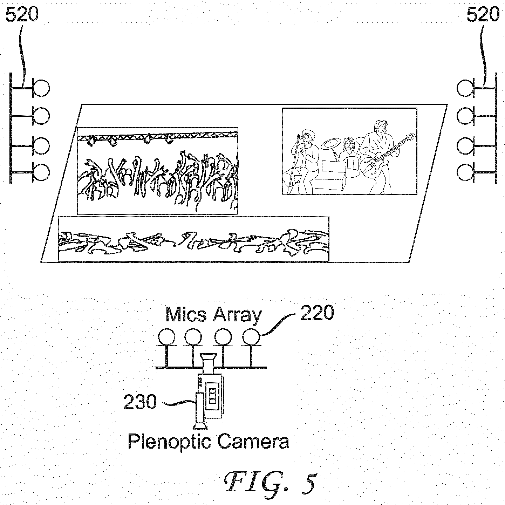

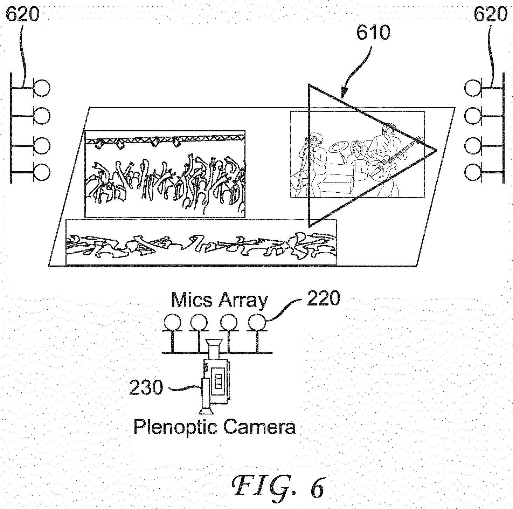

In one embodiment, as shown in Figure 5, the immersive user experience can be further enhanced by using state-of-the-art distributed microphone arrays 520. In the embodiment of Figure 6, a similar distributed microphones array system 620 can be used in order to improve automatic audio localization. In Figure 6, the dominant audio source, such as discussed in step 110 of Figure 1, is determined by exploiting both audio and video signals in order to define directions of interest. Similar to Figure 4, video cone of interest 610 is determined which in this case is enhanced due to the microphone array 620. For determining the audio signal, the localization algorithm is used and the direction of dominant audio source is considered as the direction of interest. For determining the video signal, an object tracking algorithm can be used in one embodiment. In this case, the directions of moving objects in the scene can be potentially considered as a direction of interest associated with the dominant audio source. In one embodiment, the audio and video can also be combined to provide a late fusion of candidates as detected in the audio and video case alone so that they can be applied accordingly in finding an optimized direction of interest.

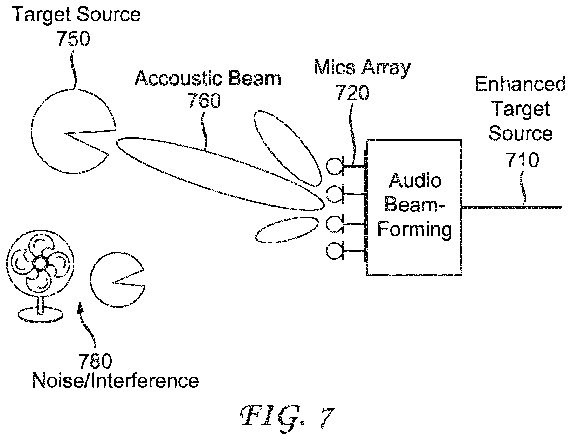

Referring back to Figure 1, the next step referenced by numerals 115 will be performed. In step 115, an audio scene of interest is determined and an audio focus analysis is performed at step 120 on this audio scene. To perform an audio focus or an audio zoom, audio beams are created inside an audio scene following the determination of audio directions of interest. In one embodiment, as may be appreciated by those skilled in the art audio beams are created using beamforming. Beamforming or spatial filtering is a signal processing technique that uses directional signal transmission or reception in order to achieve spatial selectivity. This is achieved by combining elements in a phased array in such a way that some signals at particular angles experience constructive interference while others experience destructive interference. To change the directionality of the array, the phase and relative amplitude of the signal is controlled so as to create patterns of constructive and/or destructive wave interferences. Adaptive beamforming is used to detect and estimate the signal-of-interest at the output of a sensor array by means of optimal spatial filtering and interference rejection. In this way audio signals from the microphone array of only a certain signal pattern can be selected for the target source. Audio focus can form simultaneous multiple beam, and can track an active speaker. The concept of beamforming as provided by step 120 is further illustrated by the block diagram depiction of Figure 7.

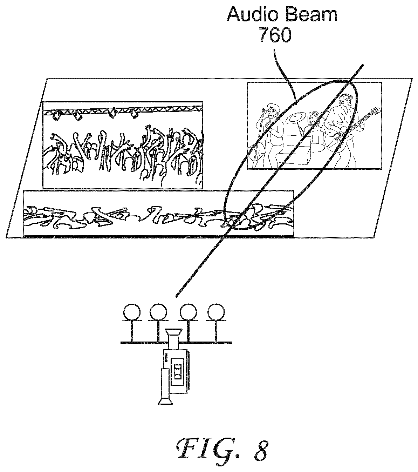

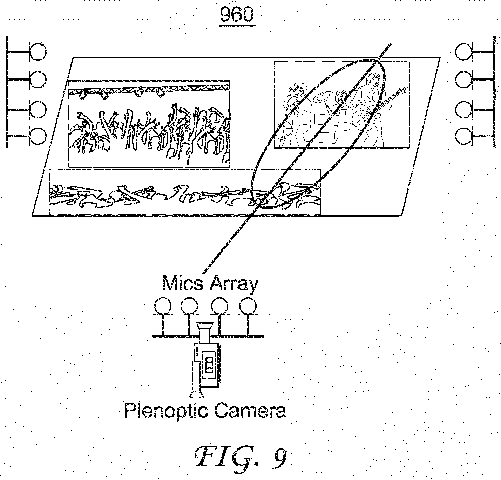

In one embodiment, as shown in Figure 7, the width of the audio beam is dependent of the microphone array size and setting. A target source that generates sound is provided in the exemplary depiction of Figure 7 as shown at 710. The target source 750 generates an acoustic beam shown at 760. The sound is then received by the microphone array 720 and processed using the audio beam forming technique to provide an enhanced target source both in terms of video and audio. Noise and other interferences (780) are appropriately filtered out. The resulting audio beam 760 is also shown in the graphic depiction of Figure 8 in an embodiment that resembles those depicted in Figures 2 through 4, and in the graphic depiction used by reference numerals 960 of Figure 9, in an embodiment with a distributed microphone array configuration (similar to Figures 5 and 6).

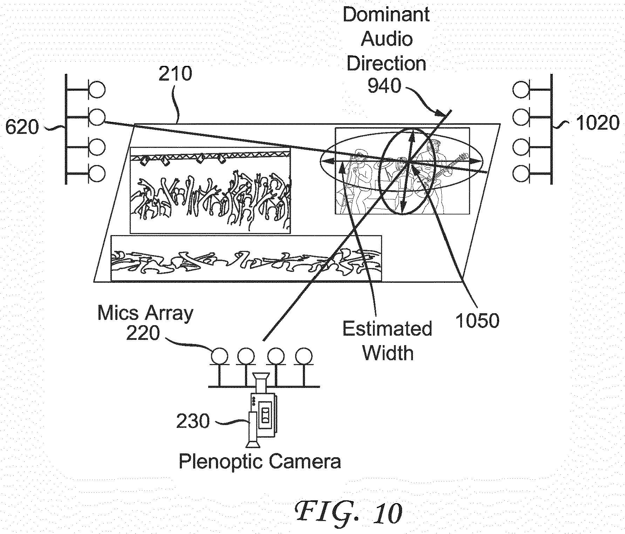

In Figure 10, another embodiment is used wherein the audio system comprises a distributed microphone array system 1020. A dominant audio direction 940 is determined. Subsequently, as shown by reference numerals 1050, by computing intersections between regions of interest, further information can be obtained on interest depth so that other steps such as beamforming as in step 120 of Figure 1.

In an alternate embodiment which is not covered by the appended claim (not shown), a user interaction system can be provided where the user selects (i) a direction among the audio based identified candidate directions and (ii) a width. Based on this selection, in one embodiment, an audio beamforming technique can be used such as the one discussed to focus on sounds coming from a particular chosen direction. The final focal surface and depth-of-field are then selected and rendered, as before according to direction and width information.

In the embodiments of Figures 8 through 10, a beamforming output signal x(t). The output signal contains both sounds from positions A and B, while the targeted zooming plane may only include sounds from position B. In this example, audio signal from microphone near position B would be exploited so that the final audio output would be, in one embodiment presented as : $xx \left(t\right) = alpha * x \left(t\right) + \left(1-alpha\right) * y \left(t\right) ,$ where alpha is the weighting factor. In this example, the higher value of alpha will mean that audio signal recorded from local microphone position B contributes more to the final audio focus as shown.

Now referring back again to Figure 1, the final step 130 is performed. Step 130 is a video refocusing step that is driven by an audio source of interest. The scene elements in the cone of interest are rendered in focus and the rest of the focal surface (and field-of-depth) is then automatically deduced in a meaningful way. This enables access to new, audio-based, engaging ways of selecting automatically and dynamically the focal surface and the depth-of-field. In this way the audio zoom feature can also be enriched with a strongly correlated video focus.

## Claims

1. A method of video refocusing, comprising:
obtaining (100) a video in a scene of interest captured by a plenoptic camera, wherein the video is associated with captured audio data;
processing (105) the captured audio data to detect a dominant audio source;
determining a first direction of the dominant audio source;
determining, from the video, second directions of moving objects of the scene of interest associated with the dominant audio source;
determining (110) a direction of interest based on the first direction and the second directions and an angular extent of a region of interest associated with the direction of interest, resulting in a video cone of interest;
processing (120) the captured audio data by beamforming based on the video cone of interest to produce zoomed audio, the zoomed audio comprising audio associated with the determined video cone of interest such that other audio signals are filtered out; and
refocusing (130) the video based on the determined video cone of interest to produce a refocused video, wherein scene elements in the determined video cone of interest are in focus.

2. An audio based refocusing video system (200) comprising:
means (290) for obtaining a video in a scene of interest captured by a plenoptic camera (220),
wherein the video is associated with captured audio data;
means (290) for processing the captured audio data to detect a dominant audio source;
means (290) for determining a first direction of the dominant audio source;
means (290) for determining , from the video, second directions of moving objects of the scene of interest associated with the dominant audio source;
means (290) for determining a direction of interest based on the first direction and the second directions and **an** angular extent of a region of interest associated with the direction of interest resulting in a video cone of interest;
means (290) for processing the captured audio by beamforming data based on the video cone of interest to produce zoomed audio, the zoomed audio comprising audio associated with the determined video cone of interest such that other audio signals are filtered out; and
means (290) .. for refocusing the video based on the determined video cone of interest to produce a refocused video, wherein scene elements in the determined video cone of interest are in focus.

## Patentansprüche

1. Verfahren zur Videorefokussierung, wobei das Verfahren umfasst:
Erhalten (100) eines Videos in einer interessierenden Szene, die durch eine plenoptische Kamera aufgenommen wird, wobei das Video mit aufgenommenen Audiodaten zusammengehörig ist;
Verarbeiten (105) der aufgenommenen Audiodaten, um eine dominante Audioquelle zu detektieren;
Bestimmen einer ersten Richtung der dominanten Audioquelle;
Bestimmen zweiter Richtungen bewegter Objekte der interessierenden Szene, die mit der dominanten Audioquelle zusammengehörig sind, aus dem Video;
Bestimmen (110) einer interessierenden Richtung auf der Grundlage der ersten Richtung und der zweiten Richtungen und einer Winkelspanne eines interessierenden Gebiets, das mit der interessierenden Richtung zusammengehörig ist, was zu einem interessierenden Videokegel führt;
Verarbeiten (120) der aufgenommenen Audiodaten durch Strahlformung auf der Grundlage des interessierenden Videokegels, um gezoomtes Audio zu erzeugen, wobei das gezoomte Audio Audio umfasst, das mit dem bestimmten interessierenden Videokegel zusammengehörig ist, sodass andere Audiosignale herausgefiltert werden; und
Refokussieren (130) des Videos auf der Grundlage des bestimmten interessierenden Videokegels, um ein refokussiertes Video zu erzeugen, wobei Szenenelemente in dem bestimmten interessierenden Videokegel im Fokus sind.

2. Videosystem (200) zur audiobasierten Refokussierung, wobei das Videosystem umfasst:
Mittel (290) zum Erhalten eines Videos in einer interessierenden Szene, die durch eine plenoptische Kamera (220) aufgenommen wird, wobei das Video mit aufgenommenen Audiodaten zusammengehörig ist;
Mittel (290) zum Verarbeiten der aufgenommenen Audiodaten, um eine dominante Audioquelle zu detektieren;
Mittel (290) zum Bestimmen einer ersten Richtung der dominanten Audioquelle;
Mittel (290) zum Bestimmen zweiter Richtungen bewegter Objekte der interessierenden Szene, die mit der dominanten Audioquelle zusammengehörig sind, aus dem Video;
Mittel (290) zum Bestimmen einer interessierenden Richtung auf der Grundlage der ersten Richtung und der zweiten Richtungen und einer Winkelspanne eines interessierenden Gebiets, das mit der interessierenden Richtung zusammengehörig ist, was zu einem interessierenden Videokegel führt;
Mittel (290) zum Verarbeiten des aufgenommenen Audios durch Strahlformung auf der Grundlage des interessierenden Videokegels, um gezoomtes Audio zu erzeugen, wobei das gezoomte Audio Audio umfasst, das mit dem bestimmten interessierenden Videokegel zusammengehörig ist, sodass andere Audiosignale herausgefiltert werden; und
Mittel (290) zum Refokussieren des Videos auf der Grundlage des bestimmten interessierenden Videokegels, um ein refokussiertes Video zu erzeugen, wobei Szenenelemente in dem bestimmten interessierenden Videokegel im Fokus sind.

## Revendications

1. Procédé de remise au point vidéo, comprenant :
l'obtention (100) d'une vidéo d'une scène d'intérêt capturée par une caméra plénoptique, où la vidéo est associée à des données audio capturées ;
le traitement (105) des données audio capturées afin de détecter une source audio dominante ;
la détermination d'une première direction de la source audio dominante ;
la détermination, à partir de la vidéo, de deuxièmes directions d'objets en mouvement de la scène d'intérêt associées à la source audio dominante ;
la détermination (110) d'une direction d'intérêt sur la base de la première direction et des deuxièmes directions et d'une étendue angulaire d'une région d'intérêt associée à la direction d'intérêt, produisant un cône d'intérêt vidéo ;
le traitement (120) des données audio capturées par formation de faisceau sur la base du cône d'intérêt vidéo afin de produire de l'audio zoomé, l'audio zoomé comprenant l'audio associé au cône d'intérêt vidéo déterminé, de telle sorte que les autres signaux audio sont éliminés par filtrage ; et
la remise au point (130) de la vidéo sur la base du cône d'intérêt vidéo déterminé afin de produire une vidéo remise au point, où la mise au point est effectuée sur les éléments de la scène situés dans le cône d'intérêt vidéo déterminé.

2. Système vidéo de remise au point basé sur l'audio (200) comprenant :
un moyen (290) pour obtenir une vidéo d'une scène d'intérêt capturée par une caméra plénoptique (220), où la vidéo est associée à des données audio capturées ;
un moyen (290) pour traiter les données audio capturées afin de détecter une source audio dominante ;
un moyen (290) pour déterminer une première direction de la source audio dominante ;
un moyen (290) pour déterminer, à partir de la vidéo, des deuxièmes directions d'objets en mouvement de la scène d'intérêt associées à la source audio dominante ;
un moyen (290) pour déterminer une direction d'intérêt sur la base de la première direction et des deuxièmes directions et une étendue angulaire d'une région d'intérêt associée à la direction d'intérêt, produisant un cône d'intérêt vidéo ;
un moyen (290) pour traiter les données audio capturées par formation de faisceau sur la base du cône d'intérêt vidéo afin de produire de l'audio zoomé, l'audio zoomé comprenant l'audio associé au cône d'intérêt vidéo déterminé, de telle sorte que les autres signaux audio sont éliminés par filtrage ; et
un moyen (290) pour remettre au point la vidéo sur la base du cône d'intérêt vidéo déterminé afin de produire une vidéo remise au point, où la mise au point est effectuée sur les éléments de la scène situés dans le cône d'intérêt vidéo déterminé.
